# EUROPÄISCHE PATENTSCHRIFT

(11) **EP 1 705 058 B1**
(45) Veröffentlichungstag und Bekanntmachung des Hinweises auf die Patenterteilung: **02.12.2009**
(21) Anmeldenummer: 06111195.1
(22) Anmeldetag: 15.03.2006
(51) Int. Cl.: B60N 3/10

(54) **Vorrichtung zur Aufnahme und Entnahme von Gebrauchs-Gegenständen**
Device for holding and removing of objects for daily use
Dispositif de rangement et de prélèvement d'objets usuels

(30) Priorität: 20.03.2005 DE 102005012713
(43) Veröffentlichungstag der Anmeldung: 27.09.2006
(73) Patentinhaber: Faurecia Innenraum Systeme GmbH, 76767 Hagenbach (DE)
(72) Erfinder: Chevroton, Vincent, Strasbourg 67000 (FR)
(74) Vertreter: Schatt, Markus F.

(56) Entgegenhaltungen:
- US-A- 3 129 569
- US-A- 4 645 157
- US-A- 5 054 733
- US-B1- 6 758 452

## Beschreibung

Die Erfindung betrifft eine Vorrichtung zur Aufnahme und Entnahme von Gebrauchs-Gegenständen.

Aus dem allgemeinen Stand der Technik sind Aufnahme-Vorrichtungen bekannt, die zur Aufnahme eines Behältnisses diese umfassende Gummi-Elemente aufweist. Derartige Vorrichtungen eigenen sich nur zur Aufnahme von Gegenständen mit kreisförmigem Querschnitt. Weiterhin haben diese Vorrichtungen den Nachteil, dass diese nach unten nicht dicht sind.

Aus den Patentdokumenten EP 0842815 B1 und EP 0072377 B1 sind Becherhalter bekannt, die zu deren Unterbringung längsverschieblich angeordnet sind.

In den Druckschriften WO 91/11945 A1 und US-A-5054733 ist eine Halteeinrichtung für Behälter mit einem Grundkörper und einem auf diesem drehbar gelagerten Ringelement und zwischen diesen angeordnete Halteelemente offenbart. Die Haltelemente sind jeweils aus zwei Armen gebildet, die über ein Gelenk miteinander verbunden sind. Zur Betätigung der Halteelemente zwischen einer offenen Stellung und einer geschlossenen Stellung, in der ein Behälter festgehalten wird, sind die Halteelemente mit dem Grundkörper einerseits und mit dem Ringelement andererseits verbunden:
- Das freie Ende des ersten Arms jedes Halteelementes ist zum einen drehbar, jedoch nicht verschiebbar im Grundkörper gelagert und zum anderen verschiebbar im Ringelement geführt.
- Demgegenüber ist das freie Ende des zweiten Arms jedes Halteelements zum einen drehbar, jedoch nicht verschiebbar im Ringelement gelagert und zum anderen verschiebbar im Grundkörper geführt.

Dadurch werden die Halteelemente bei einer Relativdrehung des Ringelements gegenüber dem Grundkörper nach innen oder nach außen verschwenkt, um einen in den Grundkörper eingestellten Behälter zu halten oder in einer offenen Stellung freizugeben oder aufzunehmen. Ein Nachteil dieser Lösung ist, dass die in der WO 91/11945 A1 und der US-A-5054733 beschriebene Halteeinrichtung keinen Verschluss aufweist.

Es ist die Aufgabe der Erfindung, eine Vorrichtung zur Aufnahme und Entnahme von Gebrauchs-Gegenständen sowie Anordnung aus einer solchen Vorrichtung und einem Einbau-Rahmen bereitzustellen, die eine stabile Aufnahme von Elementen oder Gebrauchs-Gegenständen unterschiedlicher Formgebung, wie z.B. Behältnisse, Mobiltelefone oder Taschenrechner, ermöglicht, die mechanisch zuverlässig gebaut ist, platzsparend eingebaut werden kann und zusätzlich auch eine Verschlussfunktion enthält.

Diese Aufgabe wird mit den Merkmalen der unabhängigen Patentansprüche gelöst. Weitere Ausführungsformen sind in den auf diese rückbezogenen Unteransprüchen beschrieben.

Erfindungsgemäß ist eine Vorrichtung zur Aufnahme und Entnahme von Gegenständen mit einem Rahmen-Element mit einer Öffnung, durch die zumindest teilweise die Gegenstände vorbestimmter Querschnitts-Gestalt einführbar sind, und einem Öffnungs- und Schließ-Mechanismus mit zumindest zwei Hebel-Anordnungen mit jeweils einem ersten und einen zweiten Hebel, die über ein Verbindungs-Gelenk gelenkig miteinander verbunden sind, das zur Anlage an die Außenseite des Gegenstands zu dessen Stabilisierung vorgesehen ist, vorgesehen. Der Öffnungs- und Schließ-Mechanismus weist eine Betätigungs-Einrichtung zur Kopplung der Stell-Bewegung des Verstell-Elements und der Orientierung des ersten Hebels zwischen einer offenen und einer geschlossenen Stellung der zumindest zwei Hebel-Anordnungen auf. Die Betätigungs-Einrichtung weist eine Mechanik zur Kopplung der Stell-Bewegung des Verstell-Elements und der Orientierung jedes ersten Hebels auf und der zweite Hebel ist mittels einer Lagerungs-Einrichtung rotatorisch und translatorisch am Rahmen-Element oder am Verstell-Element gelagert.

Die Mechanik zur Kopplung der Stell-Bewegung des Verstell-Elements und der Orientierung jedes ersten Hebels kann eine am Verstell-Element angeordnete Führungsbahn und ein von dieser aufgenommenes Führungs-Element, das mit dem ersten Hebel verbunden ist, aufweisen und der erste Hebel kann drehgelenkig am Rahmen-Element gelagert sein.

Dabei kann an jedem Hebelpaar eine Abdeckhaut angeordnet sein, die sich zwischen den Hebeln und dem Rahmen-Element erstreckt.

Alternativ dazu kann die Mechanik zur Kopplung der Stell-Bewegung des Verstell-Elements und der Orientierung jedes ersten Hebels eine am Rahmen-Element angeordnete Führungsbahn und ein von dieser aufgenommenes Führungs-Element, das mit dem ersten Hebel verbunden ist, aufweisen und kann der erste Hebel drehgelenkig am Verstell-Element gelagert sein.

Dabei kann an jedem Hebelpaar eine Abdeckhaut angeordnet sein, die sich zwischen den Hebeln und dem Verstell-Element erstreckt.

Das Rahmen-Element kann an einem Einbaurahmen befestigt sein.

Das Führungs-Element kann an einem starr oder gelenkig mit dem ersten Hebel verbundenen Hebel-Element angeordnet sein.

Die Lagerungs-Einrichtung kann eine Einrichtung mit einem Gelenk zur Verbindung des zweiten Hebels mit dem Rahmen-Element und eine an dem Gelenk angeordnete Führung zur Aufnahme des zweiten Hebels mit einem translatorischen Freiheitsgrad aufweisen, wobei das Gelenk die Einrichtung mit dem Rahmen-Element oder mit dem Verstell-Element drehbar mit einer Drehachse quer zur Bewegungsebene der Hebel-Anordnung verbindet.

Alternativ dazu kann die Lagerungs-Einrichtung eine Einrichtung mit einer am zweiten Hebel angeordneten Führungsbahn aufweisen, die mit einem in die Führungsbahn drehbar eingreifenden Führungs-Element, das am Rahmen-Element oder am Verstell-Element angeordnet ist, zusammenwirkt.

Im Folgenden wird die Erfindung an Hand der beiliegenden Figuren beschrieben, die zeigen:
Figur 1 eine schematische perspektivische Darstellung einer ersten Ausführungsform der erfindungsgemäßen Vorrichtung zur Aufnahme und Entnahme von Gegenständen mit einem Koordinatensystem mit den Achsen X, Y, Z,
- Figur 2 eine schematische Draufsicht auf eine zweite Ausführungsform der erfindungsgemäßen Vorrichtung zur Aufnahme und Entnahme von Gegenständen in einer ersten Endstellung oder geschlossenen Stellung,
- Figur 3 eine schematische Draufsicht auf eine zweite Ausführungsform der erfindungsgemäßen Vorrichtung zur Aufnahme und Entnahme von Gegenständen in einer mittleren oder halb offenen Stellung,
- Figur 4 eine schematische Draufsicht auf eine zweite Ausführungsform der erfindungsgemäßen Vorrichtung zur Aufnahme und Entnahme von Gegenständen in einer zweiten endstellung oder offenen Stellung,
- Figur 5 eine schematische perspektivische Darstellung einer ersten Ausführungsform der erfindungsgemäßen Vorrichtung zur Aufnahme und Entnahme von Gegenständen mit einem Koordinatensystem mit den Achsen X, Y, Z.

Die erfindungsgemäße Vorrichtung zur Aufnahme von Gebrauchs-Gegenständen oder die Aufnahme-Vorrichtung 1 kann zur Verwendung im Innenraum von Kraftfahrzeugen vorgesehen sein. Insbesondere kann die Vorrichtung 1 an einem entsprechenden Einbau-Rahmen E oder einer Einschub-Einrichtung angeordnet und z.B. an einer Mittelkonsole m Innenraum eines Kraftfahrzeuges angeordnet sein.

Die Aufnahme-Vorrichtung 1 umfasst ein Rahmen-Element 2 mit einer Öffnung 4 zur zumindest teilweisen Einführung von Gebrauchs-Gegenständen sowie ein Verstell-Element 3, das zur manuellen Betätigung der Aufnahme-Vorrichtung 1 angeordnet ist. Die Öffnung 4 ist kreisförmig oder oval oder in elipsoidischer Form gestaltet, kann jedoch auch z.B. mehreckig oder anders gestaltet sind. Das Rahmen-Element 2 ist an einem Einbau-Rahmen E befestigt. Das Rahmen-Element 2 kann Bestandteil einer Konsole oder einem Innenverkleidungsteil sein oder einem verschiebbar oder nicht verschiebbar an einem Innenverkleidungsteil angeordneten Einbaurahmen sein. Auch kann das Rahmen-Element 2 als ein Aufsatz-Element oder LagerungsElement solcher Einrichtungen gebildet sein.

Die Aufnahme-Vorrichtung 1 weist weiterhin einen Öffnungs- und Schließ-Mechanismus 10 mit zumindest zwei Hebel-Anordnungen auf, die mittels des Verstell-Elements 3 in eine offene oder geschlossene Stellung relativ zum Rahmen-Element 2 bewegt werden können. Bei den dargestellten Ausführungsformen ist das Verstell-Element 3 als kreisförmiger Drehknopf gestaltet und direkt oder mittelbar auf dem Rahmen-Element 2 angeordnet. Das Verstell-Element 3 muss jedoch nicht derart oder ringförmig gestaltet sein. Wesentlich ist, dass entsprechende Teile des Verstell-Elements 3 abschnittsweise und insbesondere kreisabschnittsweise Führungsbewegungen ausführen können. In den Figuren-Darstellungen sind Aufnahme-Vorrichtungen 1 mit jeweils drei beweglichen Hebel-Anordnungen mit den Bezugszeichen 11, 12, 13 dargestellt. Im Folgenden werden die Hebel-Anordnungen an Hand einer Hebel-Anordnung 20 beschrieben.

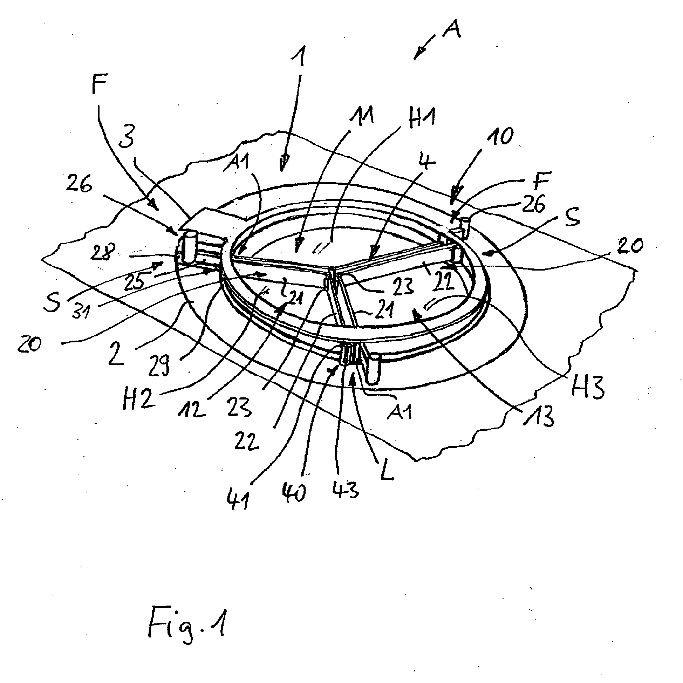

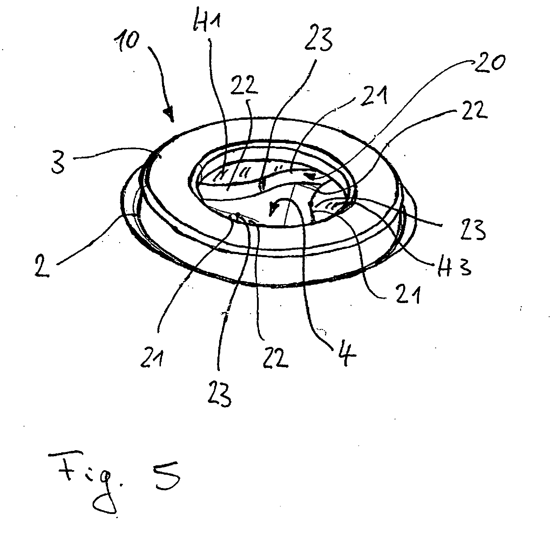

Jede Hebel-Anordnung 20 weist einen ersten 21 und einen zweiten 22 Hebel auf, deren erste, einander zugewandte Enden über ein Dreh-Gelenk oder Verbindungs-Gelenk 23 gelenkig miteinander verbunden sind. Die Hebel 21, 22 können verschiedenartig gestaltet sein. Insbesondere können die Hebel 21, 22 ihrer Längsrichtung geradlinig (Figur 1) oder krummlinig (Figur 5) gestaltet sein. Das Dreh-Gelenk 23 kann als ein ScharnierGelenk, als elastisches oder Struktur-Gelenk oder anders ausgeführt sein. An jedem Hebelpaar 21, 22 ist eine Abdeckhaut H1, H2, H3 oder eine abschnittsweise Bespannung angeordnet (in den Figuren nur andeutungsweise dargestellt), die einerseits an den Hebeln 21, 22 und andererseits je nach Ausführungsform an einem den jeweiligen Hebeln zugewandten Abschnitt des Randbereichs des Rahmen-Elements 2 oder dem Verstell-Element 3 angebracht ist. Die Abdeckhäute sind vorzugsweise derart angeordnet, dass diese die Öffnung 4 abschnittsweise oder ganz abdecken, wenn sich die Hebel-Anordnungen in der geschlossenen Stellung befinden, und eine innerhalb der Öffnung 4 gelegene Öffnung abschnittsweise oder ganz freigeben, die sich zwischen den einander zugewandten Seiten der Hebel 21, 22 verschiedener Hebelanordnungen 20 in einer offenen Stellung zur Einführung von Gebrauchs-Gegenständen bildet.

Die Hebel-Anordnungen 20 können mittels des Verstell-Elements 3, das mit einem entsprechenden Teil jeder Hebel-Anordnung in Verbindung steht, in eine offene oder eine geschlossene Stellung gefahren werden. Dabei befinden sich die Hebel der Hebel-Anordnungen bei der geschlossenen Stellung in einer zueinander nahe gelegenen oder benachbarten Lage oder in einer Lage, in der die Hebel an ihren einander zugewandten Außenseiten aneinander anliegen, während die Hebel der Hebel-Anordnungen in ihrer offenen Stellung relativ entfernt zueinander gelegen sind, um einen Gebrauchs-Gegenstand in den Bereich zwischen die Hebel einführen zu können.

Nach der Erfindung ist eine Betätigungs-Einrichtung S zur Kopplung der Verstell-Bewegung des Verstell-Elements 3 und der Orientierung des ersten Hebels 21 bzw. der ersten Hebel gegenüber dem Rahmen-Element 2 zwischen zwei Stellungen und insbesondere zwischen einer offenen und einer geschlossenen Stellung für jedes Hebelpaar 21, 22 angeordnet. Die Betätigungs-Einrichtung S umfasst also eine Einrichtung, die die Bewegung des Verstell-Elements 3 in eine entsprechende Orientierung der angekoppelten ersten Hebel 21 und dem mit diesem gekoppelten zweiten Hebel 22 umsetzt.

In einer speziellen Ausführungsform der Erfindung umfasst die Betätigungs-Einrichtung S ein Führungs-Gelenk 31 zur gelenkigen Verbindung der ersten Hebel 21 mit dem Verstell-Element 3 sowie eine Führungs-Einrichtung F, mit der die Bewegung oder Stell-Bewegung des Verstell-Elements 3 mechanisch eine Bewegung des ersten Hebels 21 bzw. der ersten Hebel gegenüber dem Rahmen-Element 2 zwischen einer ersten und einer zweiten Stellung bewirkt, wobei die Orientierung des ersten Hebels 21 im Sinne einer Veränderung der Öffnung- bzw. Schließ-Stellung des Öffnungs- und Schließ-Mechanismus 10 beeinflusst wird. Die Führungs-Einrichtung F muss nicht Teil der Betätigungs-Einrichtung S sein, sondern kann dieser auch zugeordnet sein.

In den dargestellten speziellen Ausführungsformen der Erfindung umfasst die Betätigungs-Einrichtung S ein Führungs-Gelenk 31 zur gelenkigen Aufnahme des ersten Hebels 21. Die Achse A1 des Führungs-Gelenks 31 verläuft im Wesentlichen senkrecht zu der von den Hebeln aufgespannten Ebene und an einer von dem ersten Ende beabstandeten Stelle. In dieser Ausführungsform ist die Achse A1 des Führungs-Gelenks 31 jedes Hebelpaars 20 gelenkig am Rahmen-Element 2 gelagert, so dass eine Stell- oder Dreh-Bewegung des Verstell-Elements 3 gegenüber der Achse A1 erfolgt.

In einer bevorzugten Ausführungsform umfasst die Führungs-Einrichtung F zur Verschwenkung des ersten Hebels 21 aufgrund der Bewegung des Verstell-Elements 3 eine am Rahmen-Element 2 angeordnete oder mit dieser verbundene Führungsbahn 28 zur Aufnahme eines Führungs-Elements 26, das mit dem ersten Hebel 21 verbunden ist. Das Führungs-Element 26 ist vorzugsweise an einem zweiten Ende des ersten Hebels 21 und insbesondere an einer Verlängerung 25 desselben über die Öffnung 4 hinaus angeordnet. Das Führungs-Element 26 ist in der dargestellten Ausführungsform als zylindrisches Element gestaltet und zur Erfüllung seiner Funktion quer zur Führungsbahn 28 angeordnet, so dass es verschiebbar und drehbar in der Führungsbahn 26 angeordnet ist. Es ist alternativ auch denkbar, dass das Führungs-Element an einer Stelle zwischen dem Führungs-Gelenk 31 und dem Verbindungsgelenk 23 angeordnet ist.

Der Verlauf der Führungsbahn 29 ist je nach Anwendungsfall und der zu bewirkenden Bewegung der Hebel-Anordnungen 20 im Zusammenwirken mit der Bewegung des Verstell-Elements 3 gebildet.

Das Führungs-Element 26 wirkt mit der Führungsbahn 28 folgendermaßen zusammen: Bei einer Betätigung des Verstell-Elements 3 wird das mit diesem gekoppelte Führungs-Gelenk 31 mitgeführt. Die Kopplung dieser Bewegung mit der Orientierung des ersten Hebels 21 erfolgt über das Führungs-Element 26, das in der am Rahmen-Element 2 angeordneten Führungsbahn 28 verläuft, und gegenüber der das Verstell-Element 3 ein RelativBewegung ausführt. Dadurch verursacht eine Bewegung des Verstell-Elements 3 eine entsprechende Orientierungs-Änderung des ersten Hebels 21 im Sinne einer Veränderung der Öffnung- bzw. Schließ-Stellung des Öffnungs- und Schließ-Mechanismus 10.

Bei den dargestellten Ausführungsformen der Führungs-Einrichtung Fl ist das Führungs-Element 26 an einer Verlängerung 25 oder einem starr mit dem ersten Hebel 21 verbundenen Hebel-Element 25 angeordnet, das eine Verlängerung des ersten Hebels 21 entgegengesetzt zum Verbindungs-Gelenk 23 ist. Die Führungsbahn 28 verläuft in etwa oder insbesondere in einer radialen Richtung in Bezug auf die Mitte der Öffnung 4. Die Führungsbahn 28 kann auch allgemein winklig zur radialen Richtung verlaufen oder kann krummlinig gestaltet sein.

Bei diesen Ausführungsformen der Erfindung ist der zweite Hebel 22, der an seinem ersten Ende über das Verbindungs-Gelenk 23 der Hebel 21, 22 mit dem ersten Hebel verbunden ist, an seinem zweiten Ende in einer Lagerungs-Einrichtung L rotatorisch und translatorisch am Rahmen-Element 2 gelagert. Beim Verstellen der Hebel-Anordnung wird dadurch eine Veränderung der WinkelStellung des zweiten Hebels 22 relativ zum Rahmen-Element 2 im Sinne einer Veränderung der Öffnung- bzw. Schließ-Stellung des Öffnungs- und Schließ-Mechanismus 10 bewirkt. Aufgrund der Verstell-Bewegung, die mittels der Betätigungs-Einrichtung S und der Führungs-Einrichtung F eine Verstellung des ersten Hebels 21 und über das Verbindungs-Gelenk 23 diese Verstellung des ersten Hebels 11 auf den zweiten Hebel 22 übertragen wird, wird die dadurch verursachte Längs- und Dreh-Bewegung des zweiten Hebels 22 in der am Rahmen-Element 2 angeordneten Lager-Einrichtung L aufgenommen.

In der Ausführungsform der Lager-Einrichtung L nach der Figur 1 umfasst diese eine Einrichtung 40 mit einem Gelenk 41 zur Verbindung derselben mit dem Rahmen-Element 2. Die Einrichtung 40 weist eine Nut oder Führung 43 auf, die somit gelenkig am Rahmen-Element 2 angeordnet ist. In die Nut oder allgemein die Führung 43 ist der zweite Hebel 22 mit einem translatorischen Freiheitsgrad aufgenommen, so dass sich der zweite Hebel 22 je nach Verstellposition und zumindest teilweise durch die Nut hindurcherstreckt bzw. je nach Verstellposition in der Führung 43 gelegen ist. Da die Führung 43 wiederum drehbar im Rahmen-Element 2 gelagert ist, ist der zweite Hebel 22 rotatorisch und translatorisch am Rahmen-Element 2 gelagert.

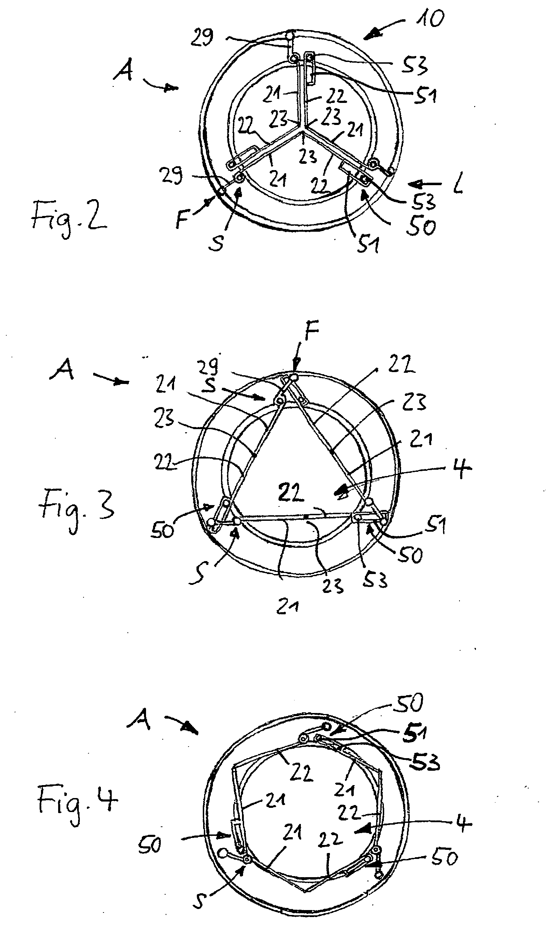

In einer weiteren Ausführungsform der Lagerungs-Einrichtung L nach den Figuren 2 bis 4 umfasst diese eine Lagerungs-Einrichtung 50 mit einer am zweiten Hebel 22 angeordneten Führungsbahn 51. Diese kann insbesondere als Kanal oder Längsnut ausgebildet sein, wie es in den Figuren 2 bis 4 dargestellt ist. Die Führungsbahn 51 wirkt zusammen mit einem Führungs-Element 53, das mit dem Rahmen-Element 2 verbunden oder an diesem angeordnet ist und das von der Führungsbahn 51 längsverschiebbar aufgenommen ist. In einer speziellen Ausgestaltung des Führungs-Elements 53 kann dieses als Stift oder zylindrisches Element gestaltet sein, der in der Führungsbahn verschiebbar gelegen ist, so dass die Verbindung zwischen dem Stift und der Führungsbahn eine translatorische und dreh-gelenkige Lagerung des zweiten Hebels 22 gegenüber dem Führungs-Elements 53 bewerkstelligt.

In dieser Ausführungsform ist jede zu einem Hebelpaar 21, 22 gehörende Abdeckhaut H1, H2, H3 zumindest jeweils abschnittsweise einerseits sowohl am jeweiligen ersten Hebel 21 als auch am zugehörigen zweiten Hebel 22 und andererseits an einem diesen Hebeln 21, 22 zugewandten Abschnitt des Rahmen-Elements 2 befestigt.

In einer zu den beschriebenen alternativen Ausführungsformen weiteren Ausführungsform der Erfindung (nicht gezeigt) ist die Achse A1 des Führungs-Gelenks 31 gelenkig am Verstell-Element 3 gelagert und die Führungs-Bahn 28 am Rahmen-Element 2 angeordnet, so dass bei einer Stell- oder Dreh-Bewegung des Verstell-Elements 3 sich dieses und somit auch die Achse A1 gegenüber dem Rahmen-Element 2 bewegt. In dieser Ausführungsform umfasst also die Führungs-Einrichtung F zur Verschwenkung des ersten Hebels 21 aufgrund der Stell-Bewegung des Verstell-Elements 3 eine am Rahmen-Element 2 angeordnete oder mit dieser verbundene Führungsbahn 28 zur Aufnahme eines Führungs-Elements 26, das mit dem ersten Hebel 21 verbunden ist. Das Führungs-Element 26 ist vorzugsweise an einem zweiten Ende des ersten Hebels 21 und insbesondere an einer Verlängerung 25 desselben über die Öffnung 4 hinaus angeordnet. Das Führungs-Element 26 ist vorzugsweise als zylindrisches Element gestaltet und zur Erfüllung seiner Funktion quer zum Verlauf der Führungsbahn 28 angeordnet, so dass es verschiebbar und drehbar in der Führungsbahn 26 angeordnet ist. Es ist alternativ auch denkbar, dass bei einer entsprechenden Anordnung der Führungsbahn am Verstell-Element das Führungs-Element an einer Stelle zwischen dem Führungs-Gelenk 31 und dem Verbindungsgelenk 23 angeordnet ist.

In einer Weiterführung dieser Ausführungsformen kann die Achse des Führungs-Gelenks 31 mit seinem dem Rahmen-Element zugewandten Ende in einer im Rahmen-Element 2 angeordneten Führungsbahn 29 geführt sein. Der Verlauf der Führungsbahn 29 ist je nach Anwendungsfall und der zu bewirkenden Bewegung der Hebel-Anordnungen 20 im Zusammenwirken mit der Bewegung des Verstell-Elements 3 gebildet.

Das Führungs-Element 26 wirkt mit der Führungsbahn 28 folgendermaßen zusammen: Bei einer Betätigung des Verstell-Elements 3 wird das Führungs-Element 26 mit diesem in der Führungsbahn 28 mitgeführt. Durch die Relativbewegung zwischen dem Führungs-Gelenk 31 oder dem Führungs-Element 26 relativ zur Führungsbahn 28 wird je nach dem Verlauf der Führungsbahn 28 die Orientierung des ersten Hebels 21 verändert. Dadurch verursacht eine Bewegung des Verstell-Elements 3 eine entsprechende Orientierungs-Änderung des ersten Hebels 21 im Sinne einer Veränderung der Öffnungs- bzw. Schließ-Stellung des Öffnungs- und Schließ-Mechanismus 10.

Das Führungs-Element 26 ist an einer Verlängerung 25 oder einem starr mit dem ersten Hebel 21 verbundenen Hebel-Element 25 angeordnet. Die Führungsbahn 28 verläuft in etwa oder insbesondere in einer radialen Richtung in Bezug auf die Mitte der Öffnung 4.

Bei dieser Ausführungsform der Erfindung ist der zweite Hebel 22, der an seinem ersten Ende über das Verbindungs-Gelenk 23 der Hebel 21, 22 mit dem ersten Hebel verbunden ist, an seinem zweiten Ende in einer Lagerungs-Einrichtung L rotatorisch und translatorisch am Verstell-Element 3 gelagert.

Die Ausführungsform der Lager-Einrichtung L kann bei der hier beschriebenen Ausführungsform wie bei den voranstehend beschriebenen Ausführungsformen sein.

In dieser Ausführungsform ist jede zu einem Hebelpaar 21, 22 gehörende Abdeckhaut H1, H2, H3 zumindest jeweils abschnittsweise einerseits sowohl am jeweiligen ersten Hebel 21 als auch am zugehörigen zweiten Hebel 22 und andererseits an einem diesen Hebeln 21, 22 zugewandten Abschnitt des Verstell-Elements 3 befestigt.

Bei den Ausführungsformen der Erfindung kann die Führungs-Einrichtung F zur Verschwenkung des ersten Hebels 21 auch anders gestaltet sein. Hierbei wird die Verstell-Bewegung des Verstell-Elements 3 relativ zur Rahmen-Element in eine Rotations-Bewegung des Führungs-Gelenks 31 umgesetzt. Dies kann z.B. auch durch einen Motor erfolgen, der als Eingangssignal die Verstell-Bewegung des Verstell-Elements gegenüber dem Rahmen-Element erhält und dessen Ausgang auf das Führungs-Gelenk 31 wirkt.

Allgemein weist also die Betätigungs-Einrichtung S eine Mechanik zur Kopplung der Stell-Bewegung des Verstell-Elements 3 und der Orientierung jedes ersten Hebels 21 auf.

Allgemein kann bei jeder der genannten Lagerungen der Lagerungseinrichtung L die Achse A1 am Verstell-Element 3 oder am Rahmen-Element 2 angeordnet sein.

Die Führungsbahn 28 kann auch allgemein winklig zur radialen Richtung verlaufen oder kann krummlinig, z.B. kreisförmig oder ellipsoid gestaltet sein.

## Patentansprüche

1. Vorrichtung zur Aufnahme und Entnahme von Gegenständen, mit einem Verstell- Element (3) und mit einem Rahmen-Element (2) mit einer Öffnung (7), durch die zumindest teilweise die Gegenstände vorbestimmter Querschnitts-Gestalt einführbar sind, und einem Öffnungs- und Schließ-Mechanismus (10) mit zumindest zwei Hebel-Anordnungen (20) mit jeweils einem ersten (21) und einen zweiten (22) Hebel, deren erste einander zugewandte Ende über ein Verbindungs-Gelenk (23) gelenkig miteinander verbunden sind, das zur Anlage an die Außenseite des Gegenstands zu dessen Stabilisierung vorgesehen ist,
wobei der Öffnungs- und Schließ-Mechanismus (10) eine Betätigungs-Einrichtung (S) zur Kopplung der Stell-Bewegung des Verstell-Elements (3) und der Orientierung des ersten Hebels (21) zwischen einer offenen und einer geschlossenen Stellung der zumindest zwei Hebel-Anordnungen (20) aufweist, und
die Betätigungs-Einrichtung (S) eine Mechanik zur Kopplung der Stell-Bewegung des Verstell-Elements (3) und der Orientierung jedes ersten Hebels (21) aufweist, und
der zweite Hebel (22) an seinem zweiten Ende in einer Lagerungs-Einrichtung (L) rotatorisch und translatorisch am Rahmen-Element (2) oder am Verstell-Element (3) gelagert ist, **dadurch gekennzeichnet, dass** der zweite Hebel (22) von der rotatorischen Lagerstelle mit einem translatorischen Freiheitsgrad aufgenommen ist, so dass sich bei der Ausführung einer Stell-Bewegung des Verstell-Elements (3) der Abstand zwischen dem Verbindungsgelenk (23) und der Aufnahme des zweiten Hebels (22) an der Lagerungs-Vorrichtung (L) verändert.

2. Aufnahme-Vorrichtung (1) nach dem Patentanspruch 1, **dadurch gekennzeichnet, dass** die Mechanik zur Kopplung der Stell-Bewegung des Verstell-Elements (3) und der Orientierung jedes ersten Hebels (21) eine am Verstell-Element (3) angeordnete Führungsbahn (28) und ein von dieser aufgenommenes Führungs-Element (26), das mit dem ersten Hebel (21) verbunden ist, aufweist und dass der erste Hebel (21) drehgelenkig am Rahmen-Element (2) gelagert ist.

3. Aufnahme-Vorrichtung (1) nach dem Patentanspruch 2, **dadurch gekennzeichnet, dass** an jeder Hebelanordnung (20) eine Abdeckhaut (H1, H2, H3) angeordnet ist, die sich zwischen den Hebeln (21,22) und dem Rahmen-Element (2) erstreckt.

4. Aufnahme-Vorrichtung (1) nach dem Patentanspruch 1, **dadurch gekennzeichnet, dass** die Mechanik zur Kopplung der Stell-Bewegung des Verstell-Elements (3) und der Orientierung jedes ersten Hebels (21) eine am Rahmen-Element (2) angeordnete Führungsbahn (28) und ein von dieser aufgenommenes Führungs-Element (26), das mit dem ersten Hebel (21) verbunden ist, aufweist und dass der erste Hebel (21) drehgelenkig am Verstell-Element (3) gelagert ist.

5. Aufnahme-Vorrichtung (1) nach dem Patentanspruch 4, **dadurch gekennzeichnet, dass** an jeder Hebelanordnung (20) eine Abdeckhaut (H1, H2, H3) angeordnet ist, die sich zwischen den Hebeln (21,22) und dem Verstell-Element (2) erstreckt.

6. Aufnahme-Vorrichtung (1) nach einem der vorangehenden Patentansprüche, **dadurch gekennzeichnet, dass** das Rahmen-Element (2) an einem Einbaurahmen (E) befestigt ist.

7. Aufnahme-Vorrichtung (1) nach einem der vorangehenden Patentansprüche, **dadurch gekennzeichnet, dass** das Führungs-Element (26) an einem starr oder gelenkig mit dem ersten Hebel (21) verbundenen Hebel-Element angeordnet ist.

8. Aufnahme-Vorrichtung (1) nach einem der vorangehenden Patentansprüche, **dadurch gekennzeichnet, dass** die Lagerungs-Einrichtung (L) eine Einrichtung (40) mit einem Gelenk (41) zur Verbindung des zweiten Hebels (22) mit dem Rahmen-Element (2) oder mit dem Verstell-Element (3) und eine an dem Gelenk (41) angeordnete Führung (43) zur Aufnahme des zweiten Hebels (22) mit einem translatorischen Freiheitsgrad aufweist.

9. Aufnahme-Vorrichtung (1) nach einem der vorangehenden Patentansprüche 1 bis 7, **dadurch gekennzeichnet, dass** die Lagerungs-Einrichtung (L) eine Einrichtung (50) mit einer am zweiten Hebel (22) angeordneten Führungsbahn (51) umfasst, die mit einem in die Führungsbahn (51) drehbar eingreifenden Führungs-Element (53), das am Rahmen-Element (2) oder am Verstell-Element (3) angeordnet ist, zusammenwirkt.

## Claims

1. A device for the holding and removal of objects with an adjusting element (3) and with a frame element (2) with an opening (7) through which at least partially the objects of predetermined cross-sectional shape can be introduced, and an opening and closing mechanism (10) with at least two lever arrangements (20) each with a first (21) and a second (22) lever whose first ends facing each other are hinged together via a connecting joint (23) which for placement against the outside of the object is provided for its stabilisation,
wherein the opening and closing mechanism (10) comprises an actuation device (S) for coupling the adjusting movement of the adjusting element (3) and the orientation of the first lever (21) between an open and a closed position of the at least two lever arrangements (20), and the actuation device (S) comprises mechanics for coupling the adjusting movement of the adjusting element (3) and the orientation of each first lever (21) and the second lever (22) at its second end is rotatorically and translatorically mounted in a bearing device (L) on the frame element (2) or on the adjusting element (3),
**characterized in that**
the second lever (22) is mounted by the rotatoric bearing point with a translatoric degree of freedom so that upon the execution of an adjusting movement of the adjusting element (3) the distance between the connecting joint (23) and the mounting of the second lever (22) on the bearing device (L) changes.

2. The holding device (1) according to Patent Claim 1, **characterized in that** the mechanics for coupling the adjusting movement of the adjusting element (3) and the orientation of each first lever (21) comprises a guideway (28) arranged on the adjusting element (3) and a guide element (26) accommodated by said guideway which is connected with the first lever (21) and that the first lever (21) is pivoted on the frame element (2).

3. The holding device (1) according to Patent Claim 2, **characterized in that** a covering skin (H1, H2, H3) is arranged on each lever arrangement (20) which covering skin extends between the levers (21, 22) and the frame element (2).

4. The holding device (1) according to Patent Claim 1, **characterized in that** the mechanics for coupling the adjusting movement of the adjusting element (3) and the orientation of each first lever (21) comprise a guideway (28) arranged on the frame element (2) and a guide element (26) accommodated by said guideway which is connected with the first lever (21) and that the first lever (21) is pivot-mounted on the adjusting element (3).

5. The holding device (1) according to Patent Claim 4, **characterized in that** on each lever arrangement (20) a covering skin (H1, H2, H3) is arranged which extends between the levers (21, 22) and the adjusting element (2).

6. The holding device (1) according to any one of the preceding patent claims, **characterized in that** the frame element (2) is fastened to an installation frame (E).

7. The holding device (1) according to any one of the preceding patent claims, **characterized in that** the guide element (26) is arranged on a lever element which is connected with the first lever (21) rigidly or hinged.

8. The holding device (1) according to any one of the preceding patent claims, **characterized in that** the bearing device (L) comprises a device (40) with a joint (41) for connecting the second lever (22) with the frame element (2) or with the adjusting element (3) and a guide (43) arranged on the joint (41) for mounting the second lever (22) with a translatoric degree of freedom.

9. The holding device (1) according to any one of the preceding patent claims 1 to 7, **characterized in that** the bearing device (L) comprises a device (50) with a guideway (51) arranged on the second lever (22) which interacts with a guide element (53) rotatably engaging in the guideway (51) which is arranged on the frame element (2) or on the adjusting element (3).

## Revendications

1. Dispositif de réception et de prélèvement d'objets, comportant un élément de réglage (3) et comportant un élément d'armature (2) avec une ouverture (7), à travers laquelle au moins partiellement les objets d'une forme de section transversale prédéterminée peuvent être introduits, et un mécanisme d'ouverture et de fermeture (10) avec au moins deux dispositifs de levier (20) comportant respectivement un premier (21) et un deuxième (22) levier, dont les premières extrémités, tournées l'une vers l'autre sont reliées de manière articulée l'une à l'autre par l'intermédiaire d'une articulation de liaison (23), qui est prévue afin de venir reposer sur le côté extérieur de l'objet en vue de sa stabilisation,
dans lequel le mécanisme d'ouverture et de fermeture (10) présente un dispositif d'actionnement (S) à des fins de couplage du mouvement de réglage de l'élément de réglage (3) et d'orientation du premier levier (21) entre une position ouverte et une position fermée des au moins deux dispositifs de levier (20), et
le dispositif d'actionnement (S) présente un mécanisme à des fins de couplage du mouvement de réglage de l'élément de réglage (3) et d'orientation de chaque premier levier (21), et le deuxième levier (22) est positionné à sa deuxième extrémité dans un dispositif de positionnement (L) de manière rotative et translative sur l'élément d'armature (2) ou sur l'élément de réglage (3), **caractérisé en ce que** le deuxième levier (22)est renfermé par l'emplacement de palier rotatif avec un degré de liberté translatif, de sorte que lors de l'exécution d'un mouvement de réglage de l'élément de réglage (3) l'espacement entre l'articulation de liaison (23) et le réceptacle du deuxième levier (22) sur le dispositif de positionnement (L) varie.

2. Dispositif de réception (1) selon la revendication 1, **caractérisé en ce que** le mécanisme à des fins de couplage du mouvement de réglage de l'élément de réglage (3) et d'orientation de chaque premier levier (21) présente une voie de guidage (28) disposée sur l'élément de réglage (3) et un élément de guidage (26) renfermé par celle-ci, qui est relié au premier levier (21), et e ce que le premier levier est positionné par une articulation rotative sur l'élément d'armature (2).

3. Dispositif de réception (1) selon la revendication 2, **caractérisé en ce que** sur chaque dispositif de levier (20), une membrane de recouvrement (H1, H2, H3) est disposée, laquelle s'étend entre les leviers (21,22) et l'élément d'armature (2).

4. Dispositif de réception (1) selon la revendication 1, **caractérisé en ce que** le mécanisme à des fins de couplage du mouvement de réglage de l'élément de réglage (3) et d'orientation de chaque premier levier (21) présente une voie de guidage (28) disposée sur l'élément d'armature (2) et un élément de guidage (26) renfermé par celle-ci, qui est relié au premier levier (21), et **en ce que** le premier levier est positionné par une articulation rotative sur l'élément de réglage (3).

5. Dispositif de réception (1) selon la revendication 4, **caractérisé en ce que** sur chaque dispositif de levier (20) une membrane de recouvrement (H1, H2, H3) est disposée, laquelle s'étend entre les leviers (21,22) et l'élément de réglage (2).

6. Dispositif de réception (1) selon une des revendications précédentes, **caractérisé en ce que** l'élément d'armature (2) est fixé sur une armature de montage (E).

7. Dispositif de réception (1) selon une des revendications précédentes, **caractérisé en ce que** l'élément de guidage (26) est disposé sur un élément de levier relié de manière rigide ou articulée au premier levier (21).

8. Dispositif de réception (1) selon une des revendications précédentes, **caractérisé en ce que** le dispositif de positionnement (L) présente un dispositif (40) comportant une articulation (41) à des fins de liaison du deuxième levier (22) avec l'élément d'armature (2) ou avec l'élément de réglage (3) et une coulisse (43) disposée sur l'articulation (41) afin de recevoir le deuxième levier (22) avec un degré de liberté translatif.

9. Dispositif de réception (1) selon une des revendications précédentes 1 à 7, **caractérisé en ce que** le dispositif de positionnement (L) comprend un dispositif (50) comportant une voie de guidage (51) disposée sur le deuxième levier (22), qui coopère avec un élément de guidage (53) venant en prise rotativement avec la voie de guidage (51), lequel est disposé sur l'élément d'armature (2) ou sur l'élément de réglage (3).
